# EUROPEAN PATENT SPECIFICATION

(11) **EP 1 786 157 B1**
(45) Date of publication and mention of the grant of the patent: **19.10.2011**
(21) Application number: 06301146.4
(22) Date of filing: 14.11.2006
(51) Int. Cl.: H04L 12/56, G06F 15/78

(54) **Switched integrated circuit connection architectures and techniques**
Verbindungsarchitekturen und Techniken integrierter Koppelschaltungen
Architectures et techniques de connexion de circuit intégré commuté

(30) Priority: 15.11.2005 US 274005
(43) Date of publication of application: 16.05.2007
(73) Proprietor: Alcatel Lucent, 75008 Paris (FR)
(72) Inventor: Hanes, Gordon, Ottawa Ontario K2P OW6 (CA); Wiemer, Douglas, Ashton Ontario K0A 1B0 (CA)
(74) Representative: Nicolle, Olivier

(56) References cited:
- EP-A- 1 372 084
- US-A1- 2004 213 148
- HENKEL J ET AL: "On-chip networks: a scalable, communication-centric embedded system design paradigm" VLSI DESIGN, 2004. PROCEEDINGS. 17TH INTERNATIONAL CONFERENCE ON MUMBAI, INDIA 5-9 JAN. 2004, LOS ALAMITOS, CA, USA,IEEE COMPUT. SOC, US, 5 January 2004 (2004-01-05), pages 845-851, XP010679107 ISBN: 0-7695-2072-3
- JIAN LIU ET AL: "A guaranteed-throughput switch for network-on-chip" SYSTEM-ON-CHIP, 2003. PROCEEDINGS. INTERNATIONAL SYMPOSIUM ON NOV. 19-21, 2003, PISCATAWAY, NJ, USA,IEEE, 19 November 2003 (2003-11-19), pages 31-34, XP010682705 ISBN: 0-7803-8160-2
- KANGMIN LEE ET AL: "A high-speed and lightweight on-chip crossbar switch scheduler for on-chip interconnection networks" EUROPEAN SOLID-STATE CIRCUITS, 2003. ESSCIRC '03. CONFERENCE ON 16-18 SEPT. 2003, PISCATAWAY, NJ, USA,IEEE, 16 September 2003 (2003-09-16), pages 453-456, XP010677427 ISBN: 978-0-7803-7995-4
- SATHE S ET AL: "Design of a switching node (router) for on-chip networks" ASIC, 2003. PROCEEDINGS. 5TH INTERNATIONAL CONFERENCE ON OCT. 21-24, 2003, PISCATAWAY, NJ, USA,IEEE, vol. 1, 21 October 2003 (2003-10-21), pages 75-78, XP010690634 ISBN: 978-0-7803-7889-6
- NOLLET V ET AL: "Designing an operating system for a heterogeneous reconfigurable SoC" PARALLEL AND DISTRIBUTED PROCESSING SYMPOSIUM, 2003. PROCEEDINGS. INTE RNATIONAL APRIL 22-26, 2003, PISCATAWAY, NJ, USA,IEEE, 22 April 2003 (2003-04-22), pages 174-180, XP010645749 ISBN: 978-0-7695-1926-5

## Description

### Field of the Invention

This invention relates generally to integrated circuits and, in particular, to internal connection structures and connection techniques for integrated circuits.

### Background

Single physical electronic devices now may contain several, possibly independent, processing elements in so-called System on Chip (SoC) configurations. The quantities of data transferred between processing elements of the same device and between devices present a challenge for current bus structures and control systems in terms of efficient use of physical on-chip and external bus connections.

An example SoC' having a switching fabric and a routing/arbitration function is described in HENKEL J. ET AL: "On-chip networks: A scalable, communication centric embedded system design paradigum", PROCEEDINGS OF THE 17TH INTERNATIONAL CONFERENCE ON VLSI DESIGN (VLSID'04) MUMBAI, INDIA, 5.-9. JAN 2004, LOS ALAMITOS, CA, USA, IEEE COMP, SOC'. US, pages 845-851, XP 010679107, ISBN: 0-7695-2072-3

An example SoC and an operating system therefor are described in NOLLET V ET AL: "Designing an operating system for a heterogeneous reconfigurable SoC" PARALLEL AND DISTRIBUTED PROCESSING SYMPOSIUM, 2003. PROCEEDINGS. INTERNATIONAL APRIL 22-26, 2003, PISCATAWAY, NJ, USA, IEEE, 22 April 2003 (2003-04-22), pages 174-180, XP010645749 ISBN: 978-0-7695-1926-5.

Programmable devices such as Network Processors (NPs) and Digital Signal Processors (DSPs) would also benefit from a more flexible connection architecture. Internal data flows within a single device could then be reshaped or reconfigured to allow data to be moved to available resources, as those resources become available. No such functionality is available in current on-chip connection architectures.

Existing solutions rely on a relationship between fixed connectivity of physical devices and data flow. The physical interconnect and the logical data flows match in a one-off configuration, requiring analysis, design, and layout for every project, including Field Programmable Gate Array (FPGA)-based solutions.

Different classes of data have motivated design of different types of data bus to connect to specific types of processing elements, also referred to herein more generally as on-chip functional modules. Discrepancies can occur when functional modules of different types are connected on the same bus. This is typically the case where several functional modules are shared on the same bus to reduce the internal routing resources used.

For high data rate interfaces, multiple separate buses must be dedicated to respective specific purposes. Due to bus capacity limitations, a bus cannot be shared among common components that also share another bus. In this scenario, conventional systems use a bridging device, which requires that both buses be dedicated to a transfer, thereby reducing bus efficiency by locking out other devices which may be connected on the buses.

External access to internal buses in conventional systems is also provided through dedicated ports, such as a Peripheral Component Interconnect (PCI) port or a System Packet Interface (SPI) port. This implies that external access to a specific device requires dedicated interfaces, and hence a dedicated data bus structure.

Some conventional systems may allow two or more devices to share a resource, but are limited as to the number and functions of the connections. Additionally, these systems all have master-slave type access control, so only one device is permitted to transmit at any time. In addition, an arbitration block is required to select which particular device may use the resource.

There are also address-related disadvantages associated with currently available solutions, which use "flat" address spaces. Thus, there is no mechanism for controlling access at the bus level. An erroneous code word, a bad jump address, or just poorly architected code could have severe consequences.

Although crossbar solutions are currently available, these are useful for only a few connections due to the complexity of the connections and the significant processing resources required to manage such connections. These solutions also fail to address the issues of dedicated connections and access arbitration.

Another limitation of current connection architectures is their use of different internal and external protocols. Protocols used between physical devices are different than those used internally between functional modules of each device.

Thus, there remains a need for improved integrated circuit connection architectures and techniques.

### Summary of the Invention

Embodiments of the invention address the growing need for more efficient and more flexible bus architectures in integrated circuits such as SoC and data path processing applications. Increased flexibility may be desirable to support reconfigurations in data path devices such as NPs and DSPs, for example.

Some embodiments of the invention relate to a physical switched bus architecture in which an external bus and an internal integrated circuit bus use the same protocol. Extending the range of a protocol in this manner can greatly improve the access to and performance of components connected to the bus, which may include Cache Random Access Memory (RAM), internal Synchronous RAM (SRAM), external Dynamic RAM (DRAM), etc. Further, new capabilities such as supporting multiple address domains to provide enhanced isolation between communication traffic flows, and data path redundancy that can be established in real-time as needed, may be supported with a much lower processor management requirement.

According to one aspect of the invention, there is provided an integrated circuit that includes a plurality of connection segments and a plurality of switching elements operatively coupled to the connection segments. The switching elements provide multiple switchable connections to a functional module of the integrated circuit, and include switching elements configured to switchably couple connection segments of the plurality of connection segments to establish a connection with the functional module.

The switching elements may include switching elements configured to switchably couple connection segments by at least one of: establishing a physical connection between the connection segments, and routing information between the connection segments. Routing may be performed according to a routing table.

The integrated circuit may also include an interface to an external connection, and a protocol termination point associated with a functional module of the integrated circuit. The protocol termination point may support a protocol used on the external connection, and/or be addressable in an address space used on the external connection.

The switching elements may include a central switching element and a plurality of neighbouring switching elements operatively coupled to each other and to the central switching element through respective connection segments. In this case, the interface may be operatively coupled to one of the neighbouring switching elements.

In some embodiments, the switching elements include a switching element that is further configured to determine whether a connection segment should be used to establish a connection with the functional module, and to establish a redundant connection that does not include the connection segment where a connection segment should not be used.

One or more protocol termination points may be associated with respective functional modules of an integrated circuit and addressable through the connection segments and the switching elements. At least one of a protocol termination point and a switching element may be configured to provide an addressing control function.

The addressing control function may include one or more of: an address domain function for establishing an address domain comprising addresses of a group of protocol termination points and for providing access to a protocol termination point having an address in the address domain for only other protocol termination points having addresses in the address domain, and a blocking function for blocking connections between a protocol termination point and at least one other protocol termination point based on one or more of an address of the protocol termination point and an address of the at least one other protocol termination point.

The connection segments may be multiple-conductor bus connection segments.

An integrated circuit may also include the functional module and one or more other functional modules, with each functional module being operatively coupled to a respective connection segment.

Another aspect of the invention provides a method of establishing a connection with a functional module of an integrated circuit. The method includes an operation of selecting a connection from a plurality of switchable connections with the functional module, the plurality of switchable connections comprising connections provided by a plurality of connection segments and a plurality of switching elements operatively coupled to the plurality of connection segments within the integrated circuit, and an operation of establishing the selected connection.

The operation of establishing may involve causing a switching element to perform one or more of: establishing a physical connection between connection segments, and routing information between connection segments.

The method may also include operations of determining that a connection to the functional module is to be established, based on information received from a connection external to the integrated circuit, and processing the information according to a protocol used on the external connection.

In some embodiments, the method involves determining that a connection to the functional module is to be established, based on an address received from a connection external to the integrated circuit, the address comprising an address in an address space used on the external connection, and identifying the functional module based on the received address.

The operation of selecting may involve determining whether a connection segment should be used to establish a connection with the functional module, and selecting a connection that does not include the connection segment where the connection segment should not be used. In this case, determining may involve determining whether a connection segment is currently busy.

The method may also include determining whether a connection with the functional module would violate an access rule for the functional module. A connection with the functional module is then established only if permitted by the access rule. The access rule may restrict connections with the functional module based on at least one of: an address domain comprising an address associated with the functional module and addresses for which connections with the functional module are permitted, and an address blocking group comprising addresses for which connections with the functional module are blocked.

According to a further aspect of the invention, an integrated circuit includes an interface between an external connection and an internal connection of the integrated circuit, and a protocol termination point operatively coupled to the internal connection, the protocol termination point being addressable using an address in an address space used on the external connection.

The protocol termination point may be further configured to support a protocol used on the external connection.

Other aspects and features of embodiments of the present invention will become apparent to those ordinarily skilled in the art upon review of the following description.

### Brief Description of the Drawings

Examples of embodiments of the invention will now be described in greater detail with reference to the accompanying drawings, in which:
Fig. 1 is a block diagram of a connection architecture according to an embodiment of the invention.
Fig. 2 is a block diagram of an integrated circuit incorporating an embodiment of the invention.
Fig. 3 is a table illustrating address domains.
Fig. 4 is a flow diagram of a method according to an embodiment of the invention.

### Detailed Description of Preferred Embodiments

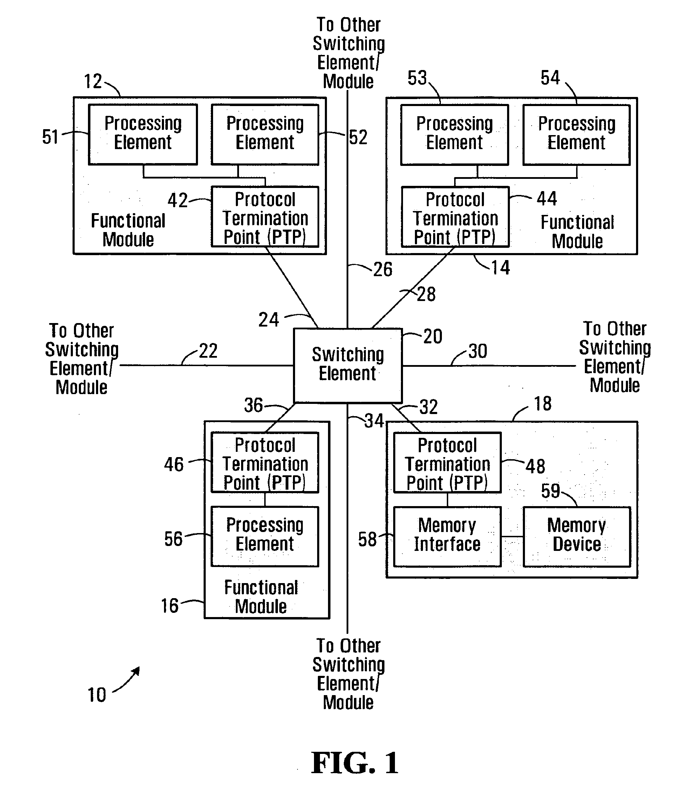

As noted above, existing solutions for interconnecting functional modules within an integrated circuit, and possibly also externally, have several significant drawbacks. Fig. 1 is a block diagram of an internal connection architecture according to an embodiment of the invention, which addresses many of the shortcomings of existing solutions.

The architecture 10 represents an illustrative example of an internal connection architecture to be implemented in an integrated circuit. As shown, functional modules 12, 14, 16, 18 are operatively coupled to a switching element 20 through connection segments 24, 28, 32, 36. The switching element 20 may also be operatively coupled to other switching elements and to other functional modules through the connection segments 22, 26, 30, 34.

It should be appreciated that the invention is in no way limited to the particular architecture shown in Fig. 1. For example, an integrated circuit may include many switching elements, only one of which has been explicitly shown. An integrated circuit may also include further, fewer, or different types of functional modules than those shown in Fig. 1, interconnected in a similar or different manner. Thus, the example architecture 10 of Fig. 1, as well as the contents of the other drawings, are intended solely for illustrative purposes, and do not limit the scope of the present invention.

The physical implementation of the connection segments 22, 24, 26, 28, 30, 32, 34, 36 may vary between different integrated circuits. In general, each connection segment represents a physical layer component through which information can be transferred. According to one embodiment, each connection segment includes an electrical conductor, although multiple conductors would be provided in a switched bus system.

Implementations in which connection segments of different types are provided in the same architecture are also contemplated. Where components of different functional modules support different bus widths, for instance, any or all of the connection segments may have different widths. The presence of switching elements between connection segments may also be advantageous where different connection speeds are supported by different connection segments, or other characteristics or features vary between connection segments.

Each functional module 12, 14, 16, 18 represents an example of a component which supports a function of an integrated circuit. The functional modules 12, 14 for example, provide multiple processing elements 51, 52, 53, 54, each of which might be a microprocessor, a microcontroller, a DSP, an FPGA, etc. The functional module 16 is substantially similar, although it includes only a single processing element 56. Storage functions are provided by the functional module 18, which includes a memory interface 58 and a memory device 59. Any of many different types of memory device, which may or may not be used in conjunction with a corresponding memory interface, may be provided in the functional module 18. A solid state memory device, examples of which have been noted above, represents one possible implementation of the memory device 59.

Embodiments of the invention may be used in conjunction with virtually any type or combination of types of functional module. The specific functional modules 12, 14, 16, 18 are examples only. Other types of functional module may also or instead be coupled to connection segments in a switched connection architecture. The present invention is not dependent upon any particular functional module types or structures.

Shown within each functional module 12, 14, 16, 18 is a respective protocol termination point (PTP) 42, 44, 46, 48. In other embodiments, any or all of these PTPs may be implemented separately from their corresponding functional modules. The PTPs 42, 44, 46, 48 are addressable entities through which each functional module 12, 14, 16, 18 may be accessed. A PTP may send, receive, or both send and receive information through its associated connection segment 24, 28, 32, 36, and thus transfer information between a functional module 12, 14, 16, 18 and a switched connection structure.

One function of a PTP is to terminate an internal protocol used in the switched connection architecture 10. Each PTP may thus include a processing element or other component for converting information between the internal protocol and formats/protocols understood by the components of its associated functional module, if necessary. In some embodiments, the internal protocol is consistent with an external protocol used to transfer information on connections external to an integrated circuit.

A PTP may be substantially similar in structure to an endpoint used for inter-device communications. However, this type of endpoint is typically used only for inter-device communications, and not for communications internally between functional modules of a single integrated circuit. Conventional knowledge clearly teaches away from use of an endpoint internally within an integrated circuit. As discussed in detail herein, implementation of a PTP within an integrated circuit has many benefits which would not be apparent from existing endpoint or inter-device connection technologies.

The switching element 20 establishes physical or logical connections between connection segments, so as to establish connections through the switched connection structure. A switching element in a switched connection architecture may thus perform physical switching functions, logical switching/routing functions, or both types of function. In the case of a logical connection, information is transferred between connection segments by the switching element 20, even though a continuous physical path might not exist between connection segments.

Like a PTP, a switching element could be similar in structure to a switch used to connect different devices through an external connection structure, although the substantial benefits of implementing such a switch, or a different switching element, in the manner disclosed herein are in no way apparent from existing techniques or connection structures.

In one embodiment, the switching element 20 includes interfaces such as ports compatible with the connection segments 22, 24, 26, 28, 30, 32, 34, 36, a switching and/or routing module operatively coupled to the interfaces, and a control module such as a processing element for controlling the operation of the switching/routing module to provide physical connections and/or data transfer between the interfaces. A memory might also be provided in the switching element 20 for storing a routing table and/or control software. A PTP may have a substantially similar structure, but need not support the same level of switching/routing functionality as a switching element.

The switching element 20 and other neighbouring switching elements operatively coupled to the connection segments 22, 26, 30, 34 provide multiple switchable connections to any of the functional modules 12, 14, 16, 18. Information may thus be transmitted to a destination over any of multiple paths, for instance. If the connection segment 32 is busy with regular read/write access to the memory device 59 for instance, information can still flow on any of the other connection segments. In a conventional bus system, the memory access operation would render the bus unusable for any other purposes by other components which share the bus.

Suppose that the functional module 12 is currently performing a memory read operation through a connection established by the switching element 20 between the connection segments 24, 32. A simultaneous additional transfer of data between the functional modules 14, 16 would not be possible in currently available shared bus systems without interrupting the memory read transfer. In accordance with an aspect of the invention, the functional modules 14, 16 may exchange information through the connection segments 28, 36 and the switching element 20 even though the connection segments 24, 32 are busy.

Information might be transferred between functional modules for any of various reasons. In the above example of a memory read operation, the functional module 12 requires access to the storage function of the functional module 18, and specifically to data stored in the memory device 59. Other functional requirements may similarly necessitate communication between functional modules. The processing element 56 of the functional module 16 might not support all processing functions required to process received data. If encrypted data is to be processed but only the functional module 12 supports a cryptographic function, for example, then the encrypted data could be sent directly to the functional module 12 for decryption. The decrypted data could then possibly be returned to another functional module for further processing.

The actual transfer of information is accomplished in one embodiment using routing tables stored at the switching element 20 and other switching elements in the system 10. As noted above, the PTPs 42, 44, 46, 48 are addressable in the system 10. A connection with a functional module 12, 14, 16, 18 may thus be established on the basis of a target, destination, or other address specified by an entity requesting a connection with a functional module. In the routing table example, the switching element 20 and other switching elements in the system 10 route information toward a destination functional module based on a specified address and routing information stored in the switching element routing tables. Routing tables may be populated manually during configuration or reconfiguration of the system 10, automatically through discovery or other processes through which routing information can be collected, or some combination of both schemes.

A routing table is one example of a routing mechanism which may be used by the switching element 20 and other switching elements. Other mechanisms are also contemplated. A switching element might forward received information on all of its connection segments or a subset thereof, such as those connection segments other than the connection segment on which information was received or connection segments which are not currently busy with other transfers.

A switched connection architecture as shown in Fig. 1 provides the ability to establish data path redundancy, in real time and as needed. Switching elements and connection segments provide multiple possible paths to the functional modules of an integrated circuit. Upon receiving information to be transmitted to a functional module, or some other form of a request for access to a functional module, a switching element may determine whether a particular connection segment should be used to establish a connection with the functional module.

Consider an example scenario in which the functional module 12 sends data to the switching element 20 for transfer to another functional module which is connected to a neighbouring switching element coupled to the connection segment 30. Suppose also that the connection segment 30 is unavailable due to another transfer operation or a failure. The switching element 20 detects the busy status or failure of the connection segment 30, and thus determines that the connection segment 30 should not be used to establish a connection with the destination functional module. The switching element 20 then selects an alternate path to the destination functional module which does not include the unavailable connection segment 30. Alternate paths may be available through the connection segments 22, 26, 34, and the switching element 20 may establish a portion of a connection with the destination functional module through any or all of these connection segments. In some embodiments, the switching element 20 selects only one alternate path, and in other embodiments, the switching element 20 uses more than one of the alternate paths. Where information is transferred toward a destination functional module on more than one path, the PTP of the destination functional module or the switching element to which the destination functional module is operatively coupled may select one received copy of the information and discard any received duplicates.

The ability to dynamically switch redundant connections provides several significant advantages. It should be apparent from the foregoing that functional modules can communicate independently of other transactions on the bus. Conventional connection techniques do not discriminate bus partners in this manner.

Connection utilization can also be drastically improved. Burst reads and writes, for example, can occur concurrently on different connection segments without interference. Other transactions are not blocked on available connection segments, improving responsiveness to data processing requests for instance.

In addition, new data routes through the system 10 can be constructed in real time as tasks are performed by the functional modules 12, 14, 16, 18. Failover mechanisms can be enacted very quickly should a module fail. For instance, if the processing element 56 traps an error, subsequent data destined for the functional module 16 can be routed to another processing element in a different functional module. Existing systems have a single-function structure, such that a failure in a functional module or on an interface could lock the entire system.

The operation of the switching element 20 also provides advantages in terms of processing load associated with data transfer operations. Direct memory access (DMA) transfers, for example, become very efficient. This can be very important in multiple stage pipeline architectures for instance, since processing resources are not used to transfer data blocks. This is a vast improvement over existing connection systems. DMA functions can be requested by a PTP 42, 44, 46, 48, and data is copied through the switching element 20 to the target, without passing through a processing element. This is a very effective technique for passing data from one processing stage to a next processing stage. In existing systems, such access between processes tends to be limited.

In some embodiments, addressing control functions are provided by the PTPs 42, 44, 46, 48 and/or the switching element 20. For example, it may be desirable to control access to functional modules so as to enhance security. An intrusion or denial of service (DoS) attack would not be propagated if functional modules were only accessible from certain sources and thus "hidden" from other sources for instance. Rogue or buggy software could be prevented from interfering with the operation of other functional modules in a similar manner.

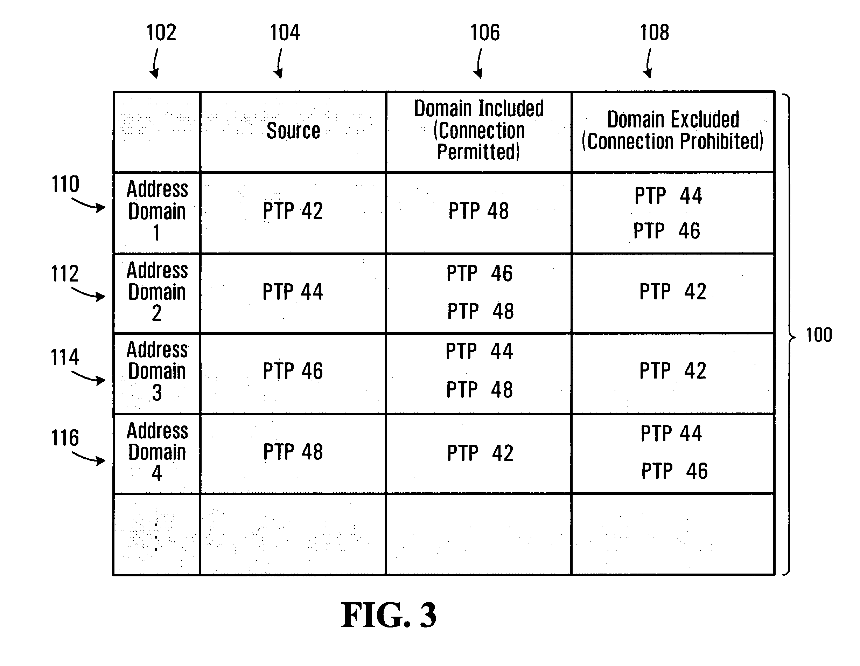

Any of several mechanisms may be provided to support this type of feature. Functional modules may be grouped into address domains in which functional modules are accessible only to other functional modules in the same domain. The address domain concept is described in further detail below with reference to Fig. 3. Another somewhat analogous addressing control function is a blocking function for blocking connections between functional modules. Blocking could be based on one or more of a target or destination address and a source address. If the processing element 56 of the functional module 16 does not require access to the memory device 59, for instance, then the switching element 20 can be programmed to block connections to the functional module 18 from the functional module 16, thereby protecting memory contents.

Routing tables at switching elements and domain and/or blocking address tables at PTPs represent examples of how these features might be implemented in the system 10.

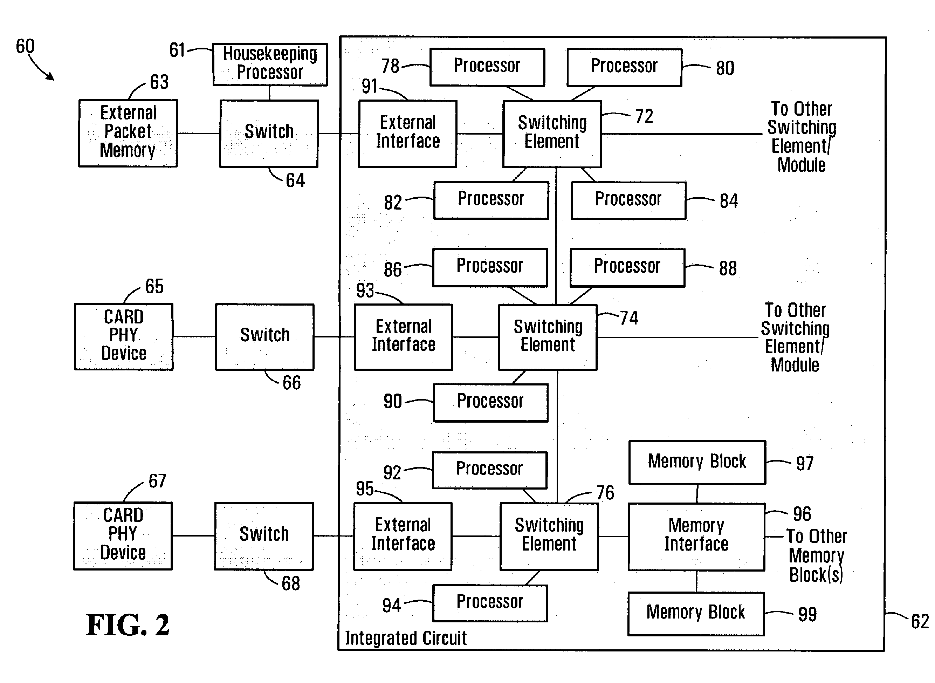

The system 10 of Fig. 1 shows only an internal structure of an integrated circuit device. Some embodiments of the invention provide further benefits relating to communication with off-chip external devices. These benefits will become apparent from the following detailed description of Fig. 2, which is a block diagram of an integrated circuit incorporating an embodiment of the invention. Illustrative example external connections and components are also shown in Fig. 2.

The entire system 60 may be implemented in an electronic circuit card, for example. In this case, the integrated circuit 62 cooperates with other components of the card, which include a housekeeping processor 61, switches 64, 66, 68, an external packet memory 63, and physical layer devices 65, 67, which may be interconnected by an external connection such as a serial bus on the card.

Those skilled in the art will be familiar with many examples of the external components shown in Fig. 2, and other external components in conjunction with which embodiments of the invention may be implemented. Since the present invention is not restricted to any particular numbers, types, or functions of such external devices, these are described herein only to the extent necessary to provide an understanding of aspects of the present invention.

Within the integrated circuit 62, the switching elements 72, 74, 76, the processors 78, 80, 82, 84, 86, 88, 90, 92, 94, the memory interface 96, and the memory blocks 97, 99 may be substantially similar to similarly-labelled components shown in Fig. 1 and described above. In order to avoid congestion in Fig. 2, however, each connection segment has not been separately labelled. PTPs also have not been separately shown in Fig. 2, but may be provided for any or all functional modules. In Fig. 2, functional modules are represented by each of the processors 78, 80, 82, 84, 86, 88, 90, 92, 94 and the combination of the memory interface 96 and the memory blocks 97, 99.

The functional modules and switching elements 72, 74, 76 in the integrated circuit 62 operate substantially as described above to establish internal connections. The integrated circuit 62 provides additional functionality of external communications through the external interfaces 91, 93, 95. Through the external interfaces 91, 93, 95, the internal connection structure is operatively coupled to an external connection and external devices.

The external interfaces 91, 93, 95 represent a transition structure from an external connection to an internal connection. External devices may communicate over longer distances at high rates by using serialized clock recovery links, for example, to aid in moving data across boards or equipment backplanes. Internal to the integrated circuit 62, signal skew and clock distribution are much more controlled, making some degree of parallel signaling more feasible. However, as with board design, some congested areas may benefit from smaller parallel buses with multiword transfer. An example would be crossing an area containing a high percentage of internal memories. As noted above, internal switching elements allow different connection segment sizes and/or speeds to be used in the same integrated circuit.

Functions of the external interfaces 91, 93, 95 may include physical layer services such as clock recovery, error checking, serializer/deserializer functions, and/or translation of information between internal and external formats. One differentiator between the external interfaces 91, 93, 95 and standard interfaces used in existing integrated devices is that, in one embodiment, the external interfaces 91, 93, 95 effectively extend an external protocol used on the external connection into the integrated circuit 62.

The meaning of a message received from an external connection is not translated from external to internal domains. The external and internal connections may both use packet formats, but the internal connections may handle multiword parallel packets instead of serial packets supported on the external bus, for example. Headers of packets transferred inside the integrated device may carry the information and service of an external packet header, just in a different format. The switching elements 72, 74, 76 and the functional modules of the integrated circuit 62 also support the external protocol. These components are configured to interpret messages of the external protocol, though possibly in a different data format, and to take appropriate action. For instance, request, response, acknowledgement, etc., message flows expected in accordance with the external protocol continue to be supported within the integrated device 62.

In existing connection systems, interfaces between internal and external connections terminate different protocols. One protocol is used on external connections, and a different protocol is used internally. Whereas the protocol concept may be preserved across a physical format translation performed by the external interfaces 91, 93, 95, existing systems translate both the physical format and the protocol. Required translations of not only data formats but also the meanings of information between protocols can consume significant processing resources and thereby slow the transfer of data between internal and external connections.

According to another aspect of the present invention, external address space is also extended into the integrated circuit 62, such that particular functional modules are addressable in substantially the same way by internal and external components. In conventional systems, a device can only target another device, and not specific internal functional modules of the other device. Providing individually addressable functional modules allows direct targeting of particular functional modules, and assigning addresses from an external address space used on an external connection to internal functional modules of the integrated circuit 62 also allows those functional modules to be directly addressed by external devices. If the external devices implement a similar internal connection structure, then functional modules of different devices may target each other directly. These features are not available in any existing connection systems.

The seamless protocol and addressing features enable the benefits of a hierarchical system to be applied to a connection/data path. For example, the physical layer device 65 may receive a packet and write that packet directly to one of the memory blocks 97, 99, to a specific address range permitted by configuration for instance, and one or more of the on chip processors 78, 80, 82, 84, 86, 88, 90, 92, 94 then have access to immediately begin processing of the packet. The packet can be written directly to internal memory without having to buffer or copy it. The packet, or pieces of the packet, can then be DMA transferred to one or more idle processors, taking an appropriate path based on destination. The internal connection structure is flexible, and thus is not in any way designed to match a specific data flow. Data flows around the integrated circuit 62 to and from functional modules. Multiple independent connection segments can concurrently transfer data, reaching extremely high transfer rates, several times what would be possible with conventional systems.

As a stage of processing or all required processing is completed, the packet can then be sent to another functional element on the same or a different device or stored to a memory block for retrieval by the other functional element, again possibly from permitted address space.

Thus, embodiments of the invention may provide for translation between external connection data units and internal connection data units of effectively the same protocol but possibly different formats, such as serial/parallel. Extension of external protocols into internal structures allows advanced connection services of newer protocols to be leveraged into the internal connection architecture. Protocol features such as service reliability, error detection, etc., need not end at external interfaces, as in existing solutions, and can continue into an integrated device. No existing connection techniques support such a feature.

External devices on a data plane may also be able to address one or more internal components of another device without routing through a specific port or using the control plane. This provides flexible, addressable access to internal resources of an integrated device, allowing internal addressing of information for simultaneous access by external devices and vice-versa, for instance.

Bottlenecks may also be reduced, thereby improving data flow and connection performance, since data transfers can execute concurrently on different connection segments. Multiple path routing is provided in some embodiments not only for internal connections, but also for connections involving external devices or functional modules.

As noted above, address domains may be established to control access to functional modules of an integrated device. Address domains may be established in routing tables or other address records, for example, to allow address hiding and improved isolation between data flows, and also to provide reliability and security functions.

Fig. 3 is a table illustrating address domains, and shows a simple example of how a connection structure could be divided into multiple domains. A table 100 listing addresses or other identifiers of functional elements in each domain may be stored at each switching element and/or PTP at which addressing or access controls are to be enforced.

Address domain names are shown at 102 simply for the purposes of illustration, and may assist in managing multiple domains, for example. For each domain listed at 110, 112, 114, 116, source, domain included, and domain excluded addresses or identifiers are shown at 104, 106, 108. The source, domain included, and domain excluded entries in the table 100 refer to the PTPs in Fig. 1, for simplicity.

As shown, only certain PTPs and thus only certain functional modules can communicate, such that the functional modules in each domain are protected from other functional modules. The address domains are virtual and are overlaid so that the physical connection structure can provide connection services for all domains. The physical connection structure is thereby effectively reused for each domain. However, the domains are isolated in that connections and data transfers within each domain are controlled.

In the domain 110, for example, the PTP 42 may send data to the PTP 48 but cannot access the PTPs 44, 46. Connection and access control provided by the other domains 112, 114, 116 will be apparent from Fig. 3.

One notable address domain feature can be appreciated from a comparison of the domains 114, 116. Although the PTP 46 can source a connection to the PTP 48 in the domain 114, the PTP 48 is prohibited from sourcing a connection with the PTP 46. Domains may thus have a semblance of "directional" access control.

The domain aspect of the present invention is in no way limited to any particular number or type of domains. One type of domain which has not been shown in Fig. 3 is a domain that includes all functional modules. An all-inclusive domain of this type might be useful to allow a control processor to configure and monitor the connection system, and to allow events to be sent from functional modules back to the control processor. In this case, the domain might not necessarily allow the functional modules to communicate with each other.

External devices may also exist in address domains of a connection system such as shown in Fig. 2. This feature protects an integrated device and its functional modules from unexpected accesses, which may greatly improve quality and reliability.

Address/access blocking, and possibly other address-related features, may be supported in a similar manner. For example, a blocking table might specify addresses or elements which can or cannot access each functional module, and/or addresses or elements which can or cannot be accessed by each functional module.

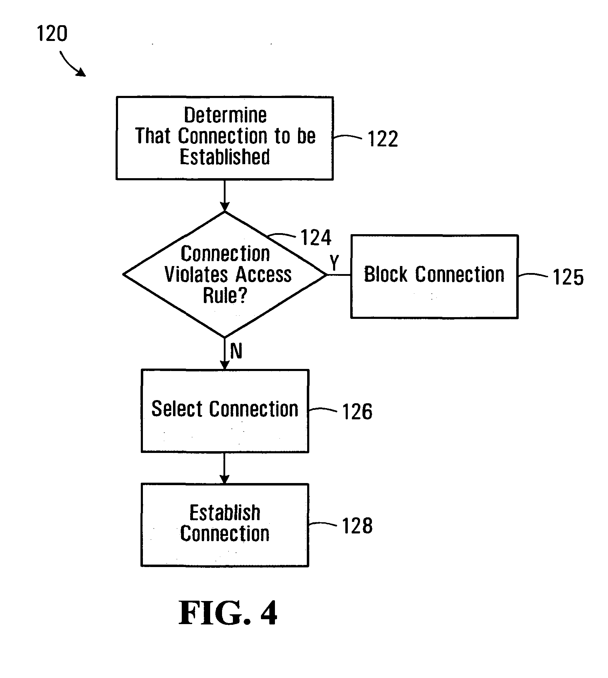

Although described above primarily in the context of connection systems, different embodiments of the invention, as a method for instance, are also contemplated. Fig. 4 is a flow diagram of one possible method for establishing a connection with a functional module in an integrated circuit.

The method 120 begins with an operation of determining that a connection with a functional module is to be established. This may involve receiving data, or more generally some form of access request, from another functional module of a device, or possibly from an external functional module or device. The particular functional module with which a connection is to be established may be identified based on an address or other identifier in a received access request. As noted above, this address may be an address in an address space used on an external connection. A received access request may also or instead be processed according to a protocol used on the external connection.

At 124, a determination is made as to whether establishing a connection with the functional module would violate an access rule for that functional module. The address domain and address blocking functions described above represent examples of how access rules may be managed in a connection system. If a connection would violate an access rule, where the target functional module is outside the address domain of the connection source for instance, then the connection is blocked, as shown at 125.

The method proceeds at 126 with an operation of selecting one or more of several possible connections with the functional module. Where multiple connections are available, any or all of those connections could be established at 128. A switching element, for example, might transfer received data on multiple connection segments or on only one of its connection segments. In a switched connection system 10 as shown in Fig. 2, switching elements may establish respective portions of a connection through a series of connection segments.

The operations shown in Fig. 4 may be performed in any of various ways, some of which will be apparent from the foregoing description of Figs. 1-3. For example, selection of a connection at 126 might involve selecting a particular connection segment which is not currently busy.

It should also be appreciated that the method 120 need not necessarily approve and establish a "permanent" connection with a functional module, such that a stream of traffic is transferred to/from a functional module over the same connection once that connection is established. A connection decision could be made at 124 for each packet in a traffic stream, for instance. The operation at 125 might then involve holding or dropping a packet, and the operation at 128 would involve transmitting the packet.

Any of a number of different sources of different scopes may be used to determine when a packet can be sent. Software applications may have the ability to force permit or force block any route for any reason for instance.

In addition, although routing tables and/or permission tables could be used in the determination at 124, actual transport connections might be generated and separated at the data-link layer. Thus, every time a packet is processed by a switching element, a determination is made as to whether the packet can be transmitted. With each transmission, these tables could be updated based on layer 2 processing feedback. If one resource is blocked, for example, a route could be selected at 126 through another device. Where a resource has moved, the operations at 126 and/or 128 may involve computing a reconfiguration of the connection structure to determine the new location of that resource, which could be updated in the tables. Activation of a redundant circuit may cause a packet to be route using port "a" instead of port "b". Data-link layer control and feedback may also allow blocking at 125 based on source and rates (layer 2 available status), or port and rate. Periodic congestion could also be alleviated at a switching element by splitting traffic over parallel routes.

Further variations of the method 120 are also contemplated. Methods according to other embodiments of the invention may include additional, fewer, or different operations than those shown, which may be performed in a similar or different order. The determination at 124 could be made after a connection has been selected at 126 for instance. Some possible examples of additional operations have been described above.

Embodiments of the present invention as disclosed herein provide advantages and features that are not provided by existing connection systems, such as flexibility to support various applications through the configuration of switched connections as needed, multiple isolated address domains sharing the same physical medium, and the ability to establish data path redundancy in real time.

The external protocol extension feature provides a lighter/simpler internal messaging scheme that is compliant with an external protocol definition. An internal interconnect interface may then carry over such desirable effects as shaping, reliable delivery, queuing, acknowledgement, and backpressure for instance. Highly integrated devices would be able to improve performance beyond what is capable with existing solutions.

Movement toward highly integrated technologies has already begun with Network on Silicon (or Network on Chip) research. These represent possible areas of application of the switched architectures and techniques disclosed herein, which could be used to provide a powerful methodology for mixing ports and types of traffic in a flexible environment.

What has been described is merely illustrative of the application of principles of embodiments of the invention. Other arrangements and methods can be implemented by those skilled in the art without departing from the scope of the present invention.

For example, functional modules need not be directly connected to switching elements by dedicated connection segments, as shown in Figs. 1 and 2. With reference to Fig. 1, the connection segments 22, 26, 30, 34 could be connected to one or more functional modules and to other switching elements. In this case, a connection segment is used as a shared multi-drop connection segment.

Another possible variation of the embodiments disclosed herein would be to combine physical address and data connections, which are normally provided as separate buses. A switched architecture according to an embodiment of the invention allows the configuration of multiple paths for independent data transfers, thereby avoiding the typical dual bus process of posting an address to an address bus and then posting data to a data bus. This improves connection performance and reduces routing congestion.

It should also be appreciated that implementation of an embodiment of the invention does not necessarily entirely preclude the use of other connection management schemes. Custom interfaces, in the form of PTPs in Fig. 1, are isolated and connected at a switching element. This is where conventional solutions and embodiments of the invention could co-exist, to define a signal interface outside the connection switching and other communication functions disclosed herein.

Switched connection architectures and techniques may provide further advantages and benefits not explicitly described herein. The use of switching elements between connection segments provides a degree of isolation between segments, allowing different connection types and/or speeds to be used. Clock frequencies can be selected on each of the connection segments based on utilization and bus width, for example. Connection switching also allows unused connection segments to be disabled, thereby saving power. Further benefits may include reducing the effects of resource starving, and management of data according to source priorities which can be assigned to establish relationships between data types and sources.

In addition, although described primarily in the context of methods and systems, other implementations of the invention are also contemplated, as instructions stored on a machine-readable medium for example.

## Claims

1. An integrated circuit (60) comprising:
a plurality of connection segments (22, 24, 26, 28, 30, 32, 34, 36); and
a plurality of switching elements (20, 72, 74, 76) operatively coupled to the plurality of connection segments (22, 24, 26, 28, 30, 32, 34, 36) to provide a plurality of switchable connections to a functional module (12, 14, 16, 18, 78, 80, 82, 84, 86, 88, 90, 92, 94, 96, 97, 99) of the integrated circuit (60), the switching elements (20, 72, 74, 76) comprising switching elements configured to switchably couple connection segments of the plurality of connection segments (22, 24, 26, 28, 30, 32, 34, 36) to establish a connection with the functional module (12, 14, 16, 18, 78, 80, 82, 84, 86, 88, 90, 92, 94, 96, 97, 99),
the integrated circuit (60) being **characterised:**
**by** further comprising one or more protocol termination points (42, 44, 46, 48), each protocol termination point (42, 44, 46, 48) being associated with a respective functional module (12, 14, 16, 18, 78, 80, 82, 84, 86, 88, 90, 92, 94, 96, 97, 99) and addressable through the plurality of connection segments (22, 24, 26, 28, 30, 32, 34, 36) and the plurality of switching elements (20, 72, 74, 76), and
in that at least one of a protocol termination point (42, 44, 46, 48) and a switching element (20, 72, 74, 76) is configured to provide an addressing control function.

2. The integrated circuit (60) of claim 1, wherein the switching elements (20, 72, 74, 76) comprise switching elements configured to switchably couple connection segments by at least one of: establishing a physical connection between the connection segments, and routing information between the connection segments.

3. The integrated circuit (60) of claim 2, wherein the switching elements (20, 72, 74, 76) comprise a switching element configured to route information between the connection segments according to a routing table.

4. The integrated circuit (60) of any one of claims 1 to 3, further comprising:
an interface (64, 66, 68) to an external connection,
the one or more protocol termination points (42, 44, 46, 48) supporting a protocol used on the external connection.

5. The integrated circuit (60) of claim 4, wherein the switching elements (20, 72, 74, 76) comprise a central switching element and a plurality of neighbouring switching elements operatively coupled to each other and to the central switching element through respective connection segments, and wherein the interface (64, 66, 68) is operatively coupled to one of the neighbouring switching elements.

6. The integrated circuit (60) of any one of claims 1 to 3, further comprising:
an interface (64, 66, 68) to an external connection,
the one or more protocol termination points (42, 44, 46, 48) being addressable in an address space used on the external connection.

7. The integrated circuit (60) of any one of claims 1 to 6, wherein the switching elements (20, 72, 74, 76) comprise a switching element further configured to determine whether a connection segment should be used to establish a connection with the functional module (12, 14, 16, 18, 78, 80, 82, 84, 86, 88, 90, 92, 94, 96, 97, 99), and to establish a redundant connection that does not include the connection segment where a connection segment should not be used.

8. The integrated circuit (60) of claim 1, wherein the addressing control function comprises one or more of:
an address domain function for establishing an address domain comprising addresses of a group of protocol termination points (42, 44, 46, 48) and for providing access to a protocol termination point (42, 44, 46, 48) having an address in the address domain for only other protocol termination points (42, 44, 46, 48) having addresses in the address domain; and
a blocking function for blocking connections between a protocol termination point (42, 44, 46, 48) and at least one other protocol termination point (42, 44, 46, 48) based on one or more of an address of the protocol termination point (42, 44, 46, 48) and an address of the at least one other protocol termination point (42, 44, 46, 48).

9. The integrated circuit (60) of any one of claims 1 to 8, wherein the connection segments (22, 24, 26, 28, 30, 32, 34, 36) comprise multiple-conductor bus connection segments.

10. The integrated circuit (60) of any one of claims 1 to 3, further comprising:
a plurality of functional modules (12, 14, 16, 18, 78, 80, 82, 84, 86, 88, 90, 92, 94, 96, 97, 99), including the functional module, each functional module (12, 14, 16, 18, 78, 80, 82, 84, 86, 88, 90, 92, 94, 96, 97, 99) being operatively coupled to a respective connection segment (22, 24, 26, 28, 30, 32, 34, 36).

11. A method (120) of establishing a connection with a functional module (12, 14, 16, 18, 78, 80, 82, 84, 86, 88, 90, 92, 94, 96, 97, 99) of an integrated circuit (60), the method (120) comprising:
selecting (126) a connection from a plurality of switchable connections with the functional module, the plurality of switchable connections comprising connections provided by a plurality of connection segments (22, 24, 26, 28, 30, 32, 34, 36) and a plurality of switching elements (20, 72, 74, 76) operatively coupled to the plurality of connection segments (22, 24, 26, 28, 30, 32, 34, 36) within the integrated circuit (60); and
establishing (128) the selected connection,
the method being **characterised:**
**by** further comprising determining (124) whether a connection with the functional module (12, 14, 16, 18, 78, 80, 82, 84, 86, 88, 90, 92, 94, 96, 97, 99) would violate an access rule for the functional module (12, 14, 16, 18, 78, 80, 82, 84, 86, 88, 90, 92, 94, 96, 97, 99), and
in that a connection with the functional module (12, 14, 16, 18, 78, 80, 82, 84, 86, 88, 90, 92, 94, 96, 97, 99) is established only if permitted by the access rule.

12. The method (120) of claim 11, wherein establishing (128) comprises causing a switching element (20, 72, 74, 76) to perform one or more of: establishing a physical connection between connection segments, and routing information between connection segments.

13. The method (120) of claim 11 or claim 12, further comprising:
determining (122) that a connection to the functional module (12, 14, 16, 18, 78, 80, 82, 84, 86, 88, 90, 92, 94, 96, 97, 99) is to be established, based on information received from a connection external to the integrated circuit; and
processing the information according to a protocol used on the external connection.

14. The method (120) of claim 11 or claim 12, further comprising:
determining (122) that a connection to the functional module (12, 14, 16, 18, 78, 80, 82, 84, 86, 88, 90, 92, 94, 96, 97, 99) is to be established, based on an address received from a connection external to the integrated circuit (60), the address comprising an address in an address space used on the external connection; and
identifying the functional module based on the received address.

15. The method (120) of any one of claim 11 to 14, wherein selecting (126) comprises determining whether a connection segment should be used to establish a connection with the functional module (12, 14, 16, 18, 78, 80, 82, 84, 86, 88, 90, 92, 94, 96, 97, 99), and selecting a connection that does not include the connection segment where the connection segment should not be used.

16. The method (120) of claim 15, wherein determining whether a connection segment should be used to establish a connection with the functional module (12, 14, 16, 18, 78, 80, 82, 84, 86, 88, 90, 92, 94, 96, 97, 99) comprises determining whether a connection segment is currently busy.

17. The method (120) of claim 11, wherein the access rule restricts connections with the functional module (12, 14, 16, 18, 78, 80, 82, 84, 86, 88, 90, 92, 94, 96, 97, 99) based on at least one of: an address domain comprising an address associated with the functional module (12, 14, 16, 18, 78, 80, 82, 84, 86, 88, 90, 92, 94, 96, 97, 99) and addresses for which connections with the functional module (12, 14, 16, 18, 78, 80, 82, 84, 86, 88, 90, 92, 94, 96, 97, 99) are permitted, and an address blocking group comprising addresses for which connections with the functional module (12, 14, 16, 18, 78, 80, 82, 84, 86, 88, 90, 92, 94, 96, 97, 99) are blocked.

18. A machine-readable medium storing instructions which when executed perform the method (120) of any one of claims 11 to 17.

## Patentansprüche

1. Integrierter Schaltkreis (60), umfassend:
Eine Mehrzahl von Verbindungssegmenten (22, 24, 26, 28, 30, 32, 34, 36); und
eine Mehrzahl von Schaltelementen (20, 72, 74, 76), welche operativ an die Mehrzahl von Verbindungssegmenten (22, 24, 26, 28, 30, 32, 34, 36) gekoppelt sind, um eine Mehrzahl von schaltbaren Verbindungen an ein Funktionsmodul (12, 14, 16, 18, 78, 80, 82, 84, 86, 88, 90, 92, 94, 96, 97, 99) des integrierten Schaltkreises (60) bereitzustellen, wobei die Schaltelemente (20, 72, 74, 76) Schaltelemente umfasst, die für das schaltbare Koppeln von Verbindungssegmenten der Mehrzahl von Verbindungssegmenten (22, 24, 26, 28, 30, 32, 34, 36) konfiguriert sind, um eine Verbindung mit dem Funktionsmodul (12, 14, 16, 18, 78, 80, 82, 84, 86, 88, 90, 92, 94, 96, 97, 99) herzustellen,
wobei der integrierte Schaltkreis (60) **dadurch gekennzeichnet ist, dass**
er weiterhin einen oder mehrere Protokollendpunkte (42, 44, 46, 48) umfasst, wobei jeder Protokollendpunkt (42, 44, 46, 48) mit einem entsprechenden Funktionsmodul (12, 14, 16, 18, 78, 80, 82, 84, 86, 88, 90, 92, 94, 96, 97, 99) assoziiert und über eine Mehrzahl von Verbindungssegmenten (22, 24, 26, 28, 30, 32, 34, 36) und die Mehrzahl von Schaltelementen (20, 72, 74, 76) adressierbar ist, und
zumindest entweder ein Protokollendpunkt (42, 44, 46, 48) oder ein Schaltelement (20, 72, 74, 76) für die Bereitstellung einer Adressiersteuerfunktion konfiguriert ist.

2. Integrierter Schaltkreis (60) nach Anspruch 1, wobei die Schaltelemente (20, 72, 74, 76) Schaltelemente umfassen, die für das schaltbare Koppeln von Verbindungssegmenten durch zumindest entweder das Herstellen einer physischen Verbindung zwischen den Verbindungssegmenten oder das Routen von Informationen zwischen den Verbindungssegmenten konfiguriert sind.

3. Integrierter Schaltkreis (60) nach Anspruch 2, wobei die Schaltelemente (20, 72, 74, 76) ein Schaltelement umfassen, welches für das Routen von Informationen zwischen den Verbindungssegmenten gemäß einer Routing-Tabelle konfiguriert ist.

4. Integrierter Schaltkreis (60) nach einem beliebigen der Ansprüche 1 bis 3, weiterhin umfassend:
Eine Schnittstelle (64, 66, 68) zu einer externen Verbindung,
den einen oder die mehreren Protokollendpunkte (42, 44, 46, 48), welche ein auf der externen Verbindung angewendetes Protokoll unterstützen.

5. Integrierter Schaltkreis (60) nach Anspruch 4, wobei die Schaltelemente (20, 72, 74, 76) ein zentrales Schaltelement und eine Mehrzahl von benachbarten Schaltelementen, welche über die jeweiligen Verbindungssegmente operativ miteinander und an das zentrale Schaltelement gekoppelt sind, umfassen, und wobei die Schnittstelle (64, 66, 68) operativ an eines der benachbarten Schaltelemente gekoppelt ist.

6. Integrierter Schaltkreis (60) nach einem beliebigen der Ansprüche 1 bis 3, weiterhin umfassend:
Eine Schnittstelle (64, 66, 68) zu einer externen Verbindung,
wobei der eine oder die mehreren Protokollendpunkte (42, 44, 46, 48) in einem auf der externen Verbindung benutzten Adressraum adressierbar sind.

7. Integrierter Schaltkreis (60) nach einem beliebigen der Ansprüche 1 bis 6, wobei die Schaltelemente (20, 72, 74, 76) ein Schaltelement umfassen, welches weiterhin dafür konfiguriert ist, zu ermitteln, ob ein Verbindungssegment werden soll, um eine Verbindung mit dem Funktionsmodul (12, 14, 16, 18, 78, 80, 82, 84, 86, 88, 90, 92, 94, 96, 97, 99) herzustellen, und um eine redundante Verbindung herzustellen, welche nicht das Verbindungssegment umfasst, wenn ein Verbindungssegment nicht benutzt werden soll.

8. Integrierter Schaltkreis (60) nach Anspruch 1, wobei die Adressiersteuerfunktion eine oder mehrere der folgenden Funktionen umfasst:
Eine Adressdomain-Funktion zum Erstellen einer Adressdomain mit Adressen einer Gruppe von Protokollendpunkten (42, 44, 46, 48) und zum Bereitstellen von Zugang zu einem Protokollendpunkt (42, 44, 46, 48) mit einer Adresse in der Adressdomain für ausschließlich andere Protokollendpunkte (42, 44, 46, 48) mit Adressen in der Adressdomain; und
eine Sperrfunktion zum Sperren von Verbindungen zwischen einem Protokollendpunkt (42, 44, 46, 48) und mindestens einem anderen Protokollendpunkt (42, 44, 46, 48) auf der Basis von entweder einer Adresse des Protokollendpunktes (42, 44, 46, 48) oder einer Adresse des mindestens einen anderen Protokollendpunktes (42, 44, 46, 48), oder beiden.

9. Integrierter Schaltkreis (60) nach einem beliebigen der Ansprüche 1 bis 8, wobei die Verbindungssegmente (22, 24, 26, 28, 30, 32, 34, 36) Busverbindungssegmente mit mehreren Leitern umfassen.

10. Integrierter Schaltkreis (60) nach einem beliebigen der Ansprüche 1 bis 3, weiterhin umfassend:
Eine Mehrzahl von Funktionsmodulen (12, 14, 16, 18, 78, 80, 82, 84, 86, 88, 90, 92, 94, 96, 97, 99), einschließlich des Funktionsmoduls, wobei jedes Funktionsmodul (12, 14, 16, 18, 78, 80, 82, 84, 86, 88, 90, 92, 94, 96, 97, 99) operativ an ein entsprechendes Verbindungssegment (22, 24, 26, 28, 30, 32, 34, 36) gekoppelt ist.

11. Verfahren (120) zum Herstellen einer Verbindung mit einem Funktionsmodul (12, 14, 16, 18, 78, 80, 82, 84, 86, 88, 90, 92, 94, 96, 97, 99) eines integrierten Schaltkreises, (60), wobei das Verfahren (120) umfasst:
Auswählen (126) einer Verbindung aus einer Mehrzahl von schaltbaren Verbindungen mit einem Funktionsmodul, wobei die Mehrzahl von schaltbaren Verbindungen Verbindungen umfasst, welche von einer Mehrzahl von Verbindungssegmenten (22, 24, 26, 28, 30, 32, 34, 36) und einer Mehrzahl von Schaltelementen (20, 72, 74, 76), die operativ an die Mehrzahl von Verbindungssegmenten (22, 24, 26, 28, 30, 32, 34, 36) innerhalb des integrierten Schaltkreises (60) gekoppelt sind, bereitgestellt werden; und
Herstellen (128) der ausgewählten Verbindung,
wobei das Verfahren **dadurch gekennzeichnet ist, dass:**
Es weiterhin das Ermitteln (124), ob eine Verbindung mit dem Funktionsmodul (12, 14, 16, 18, 78, 80, 82, 84, 86, 88, 90, 92, 94, 96, 97, 99) gegen eine Zugangsregel für das Funktionsmodul (12, 14, 16, 18, 78, 80, 82, 84, 86, 88, 90, 92, 94, 96, 97, 99) verstoßen würde, umfasst, und
eine Verbindung mit dem Funktionsmodul (12, 14, 16, 18, 78, 80, 82, 84, 86, 88, 90, 92, 94, 96, 97, 99) nur hergestellt wird, wenn dies durch die Zugangsregel zulässig ist.

12. Verfahren (120) nach Anspruch 11, wobei das Herstellen (128) umfasst, dass ein Schaltelement (20, 72, 74, 76) veranlasst wird, einen oder mehrere der folgenden Schritte auszuführen: Herstellen einer physischen Verbindung zwischen Verbindungssegmenten, und Routen von Informationen zwischen Verbindungssegmenten.

13. Verfahren (120) nach Anspruch 11 oder Anspruch 12, weiterhin umfassend:
Bestimmen (122), auf der Basis einer von einer von dem integrierten Schaltkreis externen Verbindung empfangenen Information, dass eine Verbindung zu dem Funktionsmodul (12, 14, 16, 18, 78, 80, 82, 84, 86, 88, 90, 92, 94, 96, 97, 99) hergestellt werden soll; und
Verarbeiten der Information gemäß einem auf der externen Verbindung angewendeten Protokoll.

14. Verfahren (120) nach Anspruch 11 oder Anspruch 12, weiterhin umfassend:
Bestimmen (122), dass eine Verbindung zu dem Funktionsmodul (12, 14, 16, 18, 78, 80, 82, 84, 86, 88, 90, 92, 94, 96, 97, 99) hergestellt werden soll, auf der Basis einer von der dem integrierten Schaltkreis (60) externen Verbindung empfangenen Adresse, wobei die Adresse eine Adresse in einem auf der externen Verbindung benutzten Adressraum umfasst; und
Identifizieren des Funktionsmoduls auf der Basis der empfangenen Adresse.

15. Verfahren (120) nach einem beliebigen der Ansprüche 11 bis 14, wobei das Auswählen (126) das Ermitteln, ob ein Verbindungssegment für das Herstellen einer Verbindung mit dem Funktionsmodul (12, 14, 16, 18, 78, 80, 82, 84, 86, 88, 90, 92, 94, 96, 97, 99) benutzt werden soll, und das Auswählen einer Verbindung, welche nicht das Verbindungssegment umfasst, wenn das Verbindungssegment nicht benutzt werden soll, umfasst.

16. Verfahren (120) nach Anspruch 15, wobei das Ermitteln, ob ein Verbindungssegment für das Herstellen einer Verbindung mit dem Funktionsmodul (12, 14, 16, 18, 78, 80, 82, 84, 86, 88, 90, 92, 94, 96, 97, 99) benutzt werden soll, das Ermitteln, ob ein Verbindungssegment momentan besetzt ist, umfasst.

17. Verfahren (120) nach Anspruch 11, wobei die Zugangsregel Verbindungen mit dem Funktionsmodul (12, 14, 16, 18, 78, 80, 82, 84, 86, 88, 90, 92, 94, 96, 97, 99) auf der Basis von mindestens entweder: Einer Adressdomain mit einer mit dem Funktionsmodul (12, 14, 16, 18, 78, 80, 82, 84, 86, 88, 90, 92, 94, 96, 97, 99) assoziierten Adresse, und Adressen, für welche Verbindungen mit dem Funktionsmodul (12, 14, 16, 18, 78, 80, 82, 84, 86, 88, 90, 92, 94, 96, 97, 99) zulässig sind, und eine Adressensperrgruppe, welche Adressen umfasst, für welche Verbindungen mit dem Funktionsmodul (12, 14, 16, 18, 78, 80, 82, 84, 86, 88, 90, 92, 94, 96, 97, 99) gesperrt sind, beschränkt.

18. Maschinenlesbares Medium, auf welchem Befehle gespeichert sind, welche bei deren Ausführung das Verfahren (120) nach einem beliebigen der Ansprüche 11 bis 17 durchführen.

## Revendications

1. Circuit intégré (60), comprenant :
une pluralité de segments de connexion (22, 24, 26, 28, 30, 32, 34, 36) ; et
une pluralité d'éléments de commutation (20, 72, 74, 76) couplés de manière opérationnelle à la pluralité de segments de connexion (22, 24, 26, 28, 30, 32, 34, 36) pour fournir une pluralité de connexions commutables à un module fonctionnel (12, 14, 16, 18, 78, 80, 82, 84, 86, 88, 90, 92, 94, 96, 97, 99) du circuit intégré (60), les éléments de commutation (20, 72, 74, 76) comprenant des éléments de commutation configurés pour se coupler de manière commutable à des segments de connexion de la pluralité de segments de connexion (22, 24, 26, 28, 30, 32, 34, 36) pour établir une connexion avec le module fonctionnel (12, 14, 16, 18, 78, 80, 82, 84, 86, 88, 90, 92, 94, 96, 97, 99),
le circuit intégré (60) étant **caractérisé :**
**en ce qu'**il comprend en outre un ou plusieurs points de terminaison de protocole (42, 44, 46, 48), chaque point de terminaison de protocole (42, 44, 46, 48) étant associé à un module fonctionnel respectif (12, 14, 16, 18, 78, 80, 82, 84, 86, 88, 90, 92, 94, 96, 97, 99) et adressable par l'intermédiaire de la pluralité de segments de connexion (22, 24, 26, 28, 30, 32, 34, 36) et de la pluralité d'éléments de commutation (20, 72, 74, 76), et
**en ce que** au moins l'un d'un point de terminaison de protocole (42, 44, 46, 48) et d'un élément de commutation (20, 72, 74, 76) est configuré pour fournir une fonction de contrôle d'adressage.

2. Circuit intégré (60) selon la revendication 1, dans lequel les éléments de commutation (20, 72, 74, 76) comprennent des éléments de commutation configurés pour se coupler de manière commutable aux segments de connexion au moyen d'au moins l'un de : l'établissement d'une connexion physique entre les segments de connexion et l'acheminement d'informations entre les segments de connexion.

3. Circuit intégré (60) selon la revendication 2, dans lequel les éléments de commutation (20, 72, 74, 76) comprennent un élément de commutation configuré pour acheminer des informations entre les segments de connexion conformément à une table d'acheminement.

4. Circuit intégré (60) selon l'une quelconque des revendications 1 à 3, comprenant en outre :
une interface (64, 66, 68) avec une connexion externe,
le ou les points de terminaison de protocole (42, 44, 46, 48) prenant en charge un protocole utilisé sur la connexion externe.

5. Circuit intégré (60) selon la revendication 4, dans lequel les éléments de commutation (20, 72, 74, 76) comprennent un élément de commutation central et une pluralité d'éléments de commutation voisins couplés de manière opérationnelle les uns aux autres et à l'élément de commutation central par l'intermédiaire de segments de connexion respectifs, et dans lequel l'interface (64, 66, 68) est couplée de manière opérationnelle à l'un des éléments de commutation voisins.

6. Circuit intégré (60) selon l'une quelconque des revendications 1 à 3, comprenant en outre :
une interface (64, 66, 68) avec une connexion externe,
le ou les points de terminaison de protocole (42, 44, 46, 48) étant adressables dans un espace d'adresse utilisé sur la connexion externe.

7. Circuit intégré (60) selon l'une quelconque des revendications 1 à 6, dans lequel les éléments de commutation (20, 72, 74, 76) comprennent un élément de commutation configuré en outre pour déterminer si un segment de connexion doit être utilisé pour établir une connexion avec le module fonctionnel (12, 14, 16, 18, 78, 80, 82, 84, 86, 88, 90, 92, 94, 96, 97, 99) et pour établir une connexion redondante qui n'inclut pas le segment de connexion lorsqu'un segment de connexion ne doit pas être utilisé.

8. Circuit intégré (60) selon la revendication 1, dans lequel la fonction de contrôle d'adressage comprend une ou plusieurs des fonctions suivantes :
une fonction de domaine d'adresse pour établir un domaine d'adresse comprenant les adresses d'un groupe de points de terminaison de protocole (42, 44, 46, 48) et pour donner l'accès à un point de terminaison de protocole (42, 44, 46, 48) ayant une adresse dans le domaine d'adresse uniquement aux autres points de terminaison de protocole (42, 44, 46, 48) ayant des adresses dans le domaine d'adresse ; et
une fonction de blocage pour bloquer les connexions entre un point de terminaison de protocole (42, 44, 46, 48) et au moins un autre point de terminaison de protocole (42, 44, 46, 48) sur la base d'une ou plusieurs d'une adresse du point de terminaison de protocole (42, 44, 46, 48) et d'une adresse du au moins un autre point de terminaison de protocole (42, 44, 46, 48).

9. Circuit intégré (60) selon l'une quelconque des revendications 1 à 8, dans lequel les segments de connexion (22, 24, 26, 28, 30, 32, 34, 36) comprennent des segments de connexion de bus à multiples conducteurs.

10. Circuit intégré (60) selon l'une quelconque des revendications 1 à 3, comprenant en outre :
une pluralité de modules fonctionnels (12, 14, 16, 18, 78, 80, 82, 84, 86, 88, 90, 92, 94, 96, 97, 99), comprenant le module fonctionnel, chaque module fonctionnel (12, 14, 16, 18, 78, 80, 82, 84, 86, 88, 90, 92, 94, 96, 97, 99) étant couplé de manière opérationnelle à un segment de connexion respectif (22, 24, 26, 28, 30, 32, 34, 36).

11. Procédé (120) d'établissement d'une connexion avec un module fonctionnel (12, 14, 16, 18, 78, 80, 82, 84, 86, 88, 90, 92, 94, 96, 97, 99) d'un circuit intégré (60), le procédé (120) comprenant les étapes suivantes :
sélection (126) d'une connexion parmi une pluralité de connexions commutables avec le module fonctionnel, la pluralité de connexions commutables comprenant des connexions fournies par une pluralité de segments de connexion (22, 24, 26, 28, 30, 32, 34, 36) et une pluralité d'éléments de commutation (20, 72, 74, 76) couplés de manière opérationnelle à la pluralité de segments de connexion (22, 24, 26, 28, 30, 32, 34, 36) dans le circuit intégré (60) ; et
établissement (128) de la connexion sélectionnée, le procédé étant **caractérisé:**
**en ce qu'**il comprend en outre la détermination (124) de si une connexion avec le module fonctionnel (12, 14, 16, 18, 78, 80, 82, 84, 86, 88, 90, 92, 94, 96, 97, 99) violerait une règle d'accès pour le module fonctionnel (12, 14, 16, 18, 78, 80, 82, 84, 86, 88, 90, 92, 94, 96, 97, 99), et
**en ce qu'**une connexion avec le module fonctionnel (12, 14, 16, 18, 78, 80, 82, 84, 86, 88, 90, 92, 94, 96, 97, 99) est établie uniquement si la règle d'accès l'autorise.

12. Procédé (120) selon la revendication 11, dans lequel l'établissement (128) comprend l'activation d'un élément de commutation (20, 72, 74, 76) pour qu'il effectue l'un de : l'établissement d'une connexion physique entre les segments de connexion et l'acheminement d'informations entre les segments de connexion.

13. Procédé (120) selon la revendication 11 ou 12, comprenant en outre l'étape suivante :
détermination (122) qu'une connexion au module fonctionnel (12, 14, 16, 18, 78, 80, 82, 84, 86, 88, 90, 92, 94, 96, 97, 99) doit être établie, sur la base d'une information reçue depuis une connexion externe au circuit intégré ; et
traitement de l'information selon un protocole utilisé sur la connexion externe.

14. Procédé (120) selon la revendication 11 ou 12, comprenant en outre l'étape suivante :
détermination (122) qu'une connexion au module fonctionnel (12, 14, 16, 18, 78, 80, 82, 84, 86, 88, 90, 92, 94, 96, 97, 99) doit être établie, sur la base d'une adresse reçue depuis une connexion externe au circuit intégré (60), l'adresse comprenant une adresse dans un espace d'adresse utilisé sur la connexion externe ; et
identification du module fonctionnel sur la base de l'adresse reçue.

15. Procédé (120) selon l'une quelconque des revendications 11 à 14, dans lequel la sélection (126) comprend la détermination de si un segment de connexion doit être utilisé pour établir une connexion avec le module fonctionnel (12, 14, 16, 18, 78, 80, 82, 84, 86, 88, 90, 92, 94, 96, 97, 99) et la sélection d'une connexion qui n'inclut pas le segment de connexion lorsque le segment de connexion ne doit pas être utilisé.

16. Procédé (120) selon la revendication 15, dans lequel la détermination de si un segment de connexion doit être utilisé pour établir une connexion avec le module fonctionnel (12, 14, 16, 18, 78, 80, 82, 84, 86, 88, 90, 92, 94, 96, 97, 99) comprend la détermination de si un segment de connexion est actuellement occupé.

17. Procédé (120) selon la revendication 11, dans lequel la règle d'accès restreint les connexions au module fonctionnel (12, 14, 16, 18, 78, 80, 82, 84, 86, 88, 90, 92, 94, 96, 97, 99) sur la base d'au moins l'un de : un domaine d'adresse comprenant une adresse associée au module fonctionnel (12, 14, 16, 18, 78, 80, 82, 84, 86, 88, 90, 92, 94, 96, 97, 99) et des adresses pour lesquelles les connexions au module fonctionnel (12, 14, 16, 18, 78, 80, 82, 84, 86, 88, 90, 92, 94, 96, 97, 99) sont autorisées, et un groupe de blocage d'adresse comprenant des adresses pour lesquelles les connexions au module fonctionnel (12, 14, 16, 18, 78, 80, 82, 84, 86, 88, 90, 92, 94, 96, 97, 99) sont bloquées.

18. Support pouvant être lu par une machine et stockant des instructions qui, lorsqu'elles sont exécutées, réalisent le procédé (120) selon l'une quelconque des revendications de 11 à 17.
